# EUROPEAN PATENT APPLICATION

(11) **EP 4 726 946 A1**
(43) Date of publication of application: **15.04.2026**
(21) Application number: 25200540.0
(22) Date of filing: 05.09.2025
(51) Int. Cl.: H02J 3/001, H02J 13/12, H02J 13/36

(54) **CONTROL SYSTEM AND CONTROL METHOD**

(30) Priority: 10.10.2024 JP 2024177925
(71) Applicant: Hitachi, Ltd., Tokyo 100-8280 (JP)
(72) Inventor: FUNAYA, Yusuke, Tokyo, 1008280 (JP); WATANABE, Daichi, Tokyo, 1008280 (JP); KIM, Sungho, Tokyo, 1008280 (JP); SUENAGA, Shinya, Tokyo, 1008280 (JP); KATAYAMA, Shigeki, Tokyo, 1008280 (JP)
(74) Representative: MERH-IP Matias Erny Reichl Hoffmann Patentanwälte PartG mbB

(57) **Abstract**

Regarding a simulation target of a digital twin, even when some of areas or regions constituting the simulation target are isolated, it makes it possible to continue controlling the simulation target. A control system composed of a server computer and an edge computer(s) has a model at least at one computer among the server computer and the edge computer and a pseudo-model corresponding to the model at the other computer. The one computer generates first data to be used for specified processing at the other computer based on the model and transmits the first data to the other computer. The other computer: executes the specified processing at the other computer based on the first data received from the one computer; generates second data based on the pseudo-model when the first data cannot be received from the one computer; and executes the specified processing at the other computer based on the second data.

## Description

### CROSS-REFERENCE TO RELATED APPLICATION

This application claims priority based on Japanese patent application(s), No. 2024- 177925 filed on October 10, 2024, the entire contents of which are i ncorporated herein by reference.

### TECHNICAL FIELD

The present invention relates to a control method and a control system.

### BACKGROUND ART

In recent years, electric power systems are undergoing intensified power flow fluctuations due to the introduction of renewable energy power generation such as solar power. Accordingly, with existing protection/control systems, it has become difficult to implement stable operation of the electric power systems with operations based on set values which are determined offline in advance. So, a system for generating a protection/control scheme(s) online by using a digital twin of an electric power system located in a server and deploying the generated protection/control scheme(s) at a device(s) on an edge side of the electric power system is under consideration (see, for example, PTL 1 and PTL 2).

### CITATION LIST

### PATENT LITERATURE

PTL 1: Japanese Unexamined Patent Application Publication (Translation of PCT Application) No. 2023-538833
PTL 2: Japanese Patent Application Laid-Open (Kokai) Publication No. 2019-154201

### SUMMARY OF THE INVENTION

### PROBLEMS TO BE SOLVED BY THE INVENTION

However, the above-described conventional technology, if some of system areas which constitute the electric power system become an isolated system due to, for example, a disaster at the electric power system, the protection/control scheme(s) cannot be generated, thereby causing a problem of inability to no longer continue the protection or control. Such a problem is not limited to the electric power system, but also occurs widely in a case where the entire simulation target of the digital twin is divided by area or region and the simulation target is controlled by mutual data exchanges between the digital twin and the edge-side device(s).

The present invention was devised in consideration of the above-described circumstances and it is an object of the invention to make it possible to continue the control of the simulation target even if part of the areas or regions constituting the simulation target becomes isolated in the simulation target.

### MEANS TO SOLVE THE PROBLEMS

In order to achieve the above-described object, there is provided according to an aspect of the present invention a control method executed by a server-edge-type control system configured by including a server computer and an edge computer, wherein the control system has a model at least at one computer among the server computer and the edge computer and a pseudo-model corresponding to the model at another computer different from the one computer; and wherein the control method includes the following respective processing: processing executed by the one computer for generating first data to be used for specified processing at the other computer based on the model and transmitting the first data to the other computer; and processing executed by the other computer for: executing the specified processing at the other computer based on the first data received from the one computer; generating second data based on the pseudo-model when the first data cannot be received from the one computer; and executing the specified processing at the other computer based on the second data.

### ADVANTAGEOUS EFFECTS OF THE INVENTION

For example, even if some of the areas or regions constituting the simulation target become isolated in the simulation target, the control of the simulation target can be continued according to the present invention.

### BRIEF DESCRIPTION OF DRAWINGS

Fig. 1A is a diagram illustrating the configuration (DT side) of an electric power system protection/control system according to Embodiment 1;
Fig. 1B is a diagram illustrating the configuration (edge side) of the electric power system protection/control system according to Embodiment 1;
Fig. 2A is a diagram illustrating a scheme generation model (whole) (DT side) according to Embodiment 1;
Fig. 2B is a diagram illustrating a scheme generation pseudo-model (edge side) according to Embodiment 1;
Fig. 3 is a flowchart illustrating pseudo-model generation/update processing according to Embodiment 1;
Fig. 4 is a flowchart illustrating switching judgment processing according to Embodiment 1;
Fig. 5 is a diagram illustrating the configuration (DT side) of an electric power system protection/control system according to Embodiment 2;
Fig. 6 is a diagram illustrating a pseudo-output model according to Embodiment 2;
Fig. 7 is a flowchart illustrating pseudo-model generation/update processing according to Embodiment 2;
Fig. 8 is a flowchart illustrating switching judgment processing according to Embodiment 2; and
Fig. 9 is a diagram illustrating a computer's hardware.

### DESCRIPTION OF EMBODIMENTS

Embodiments of the present invention will be described below with reference to the drawings.

### [Embodiment 1]

In an electric power system protection/control system of a center-edge type for controlling an electric power system composed of a plurality of system areas, a protection/control scheme of a system area in the next time slot (a certain period of time such as 30 minutes) sometimes cannot be deployed from a center side to an edge side. In this case, there arises a problem that it is impossible to continue protection and control of the isolated system area including the edge (edge control device) to which the protection/control scheme cannot be deployed.

So, in Embodiment 1, generated models of a protection/control scheme are provided redundantly at the center (digital twin server) side and the edge (edge control device) side in advance. Then, when the protection/control scheme for the next time slot is generated at the center side and cannot be deployed at the edge side, the generation of the protection/control scheme is continued by using a pseudo-model placed at the edge side until recovery. Consequently, even regarding the system area isolated from the electric power system, it becomes possible to continue generating the protection/control scheme and protect and control the isolated system.

### (Configuration of Electric Power System Protection/Control System S According to Embodiment 1)

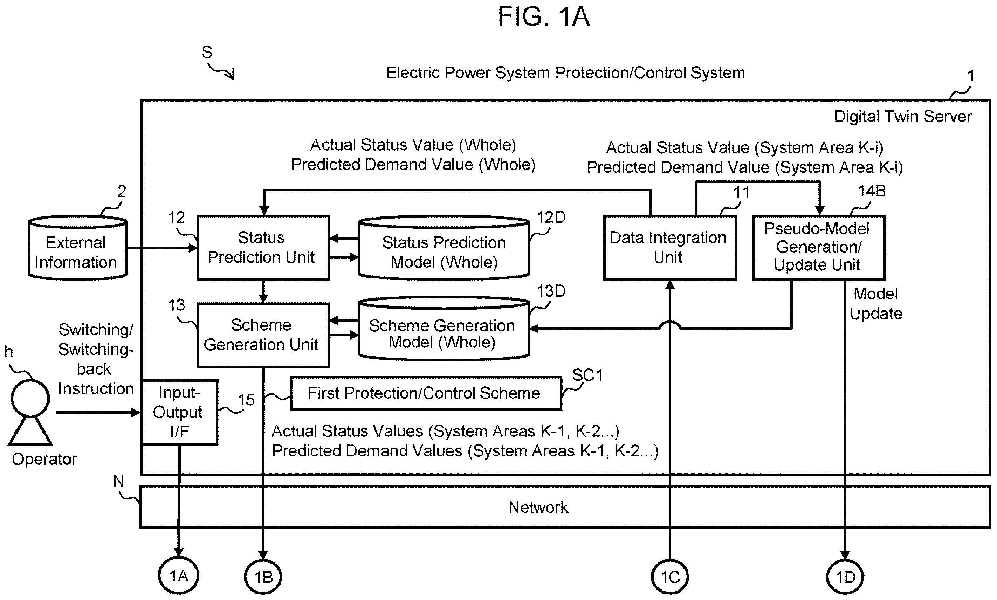

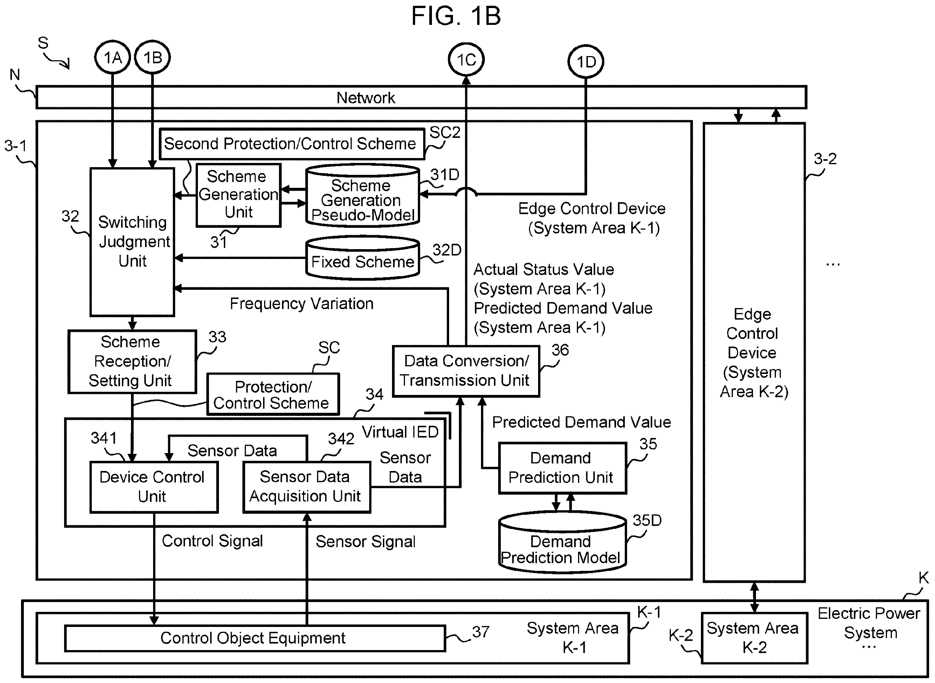

Fig. 1A and Fig. 1B are diagrams illustrating the configuration of an electric power system protection/control system S according to Embodiment 1. The electric power system protection/control system S is configured by including a digital twin server 1 and a plurality of edge control devices 3-i which are connected via a network N. The digital twin server 1 is an example of the server computer. The edge control device 3-i is an example of the edge computer.

In this embodiment, it is assumed that an electric power system K is composed of nine system areas K-i (i=1, 2, ..., 9). The plurality of system areas K-i correspond to a plurality of areas of the electric power system K. Fig. 1A shows the configuration of the digital twin server 1 (the DT side). Fig. 1B shows the configuration of the plurality of edge control devices 3-i (the edge side) of each system area K-i.

### (Configuration of Digital Twin Server 1)

Referring to Fig. 1A, the digital twin server 1 has a data integration unit 11, a status prediction unit 12, a scheme generation unit 13, a pseudo-model generation/update unit 14, and an input-output I/F (Inter/Face) 15.

The data integration unit 11 inputs actual status values (system area K-i) and predicted demand values (system area K-i) of each system area K-i, which have been received from the plurality of edge control devices 3-i, to the pseudo-model generation/update unit 14. Moreover, the data integration unit 11 integrates the actual status values (the system area K-i) and the predicted demand values (the system area K-i) of each system area K-i, which have been received from the plurality of edge control devices 3-i, thereby creating an actual status value (whole) and a predicted demand value (whole) of the entire electric power system K. The data integration unit 11 inputs the created actual status value (whole) and predicted demand value (whole) to the status prediction unit 12.

The status prediction unit 12 acquires, for example, weather information as external information 2 and data about the configuration of each system area K-i of the electric power system K. Moreover, the status prediction unit 12 acquires the actual status value (whole) and the predicted demand value (whole) from the data integration unit 11. Then, the status prediction unit 12 predicts a system status of the electric power system K and each system area K-i of the next time slot based on the external information 2 and the actual status value (whole) and the predicted demand value (whole) by using a status prediction model (whole) 12D. The system status is, for example, an air temperature at a measurement point provided in each system area K-i, active power, reactive power, an open/closed state of a circuit breaker, and a tap position of a transformer. The status prediction model (whole) 12D is a known prediction model for estimating the system status of the electric power system K and each system area K-i.

The scheme generation unit 13 generates a first protection/control scheme SC1 (a first scheme) of each system area K-i based on the system status of the electric power system K and each system area K-i, which is predicted by the status prediction unit 12, by using a scheme generation model (whole) 13D. The scheme generation unit 13 transmits the generated first protection/control scheme SC1 of the system area K-i to each edge control device 3-i (system area K-i). The protection/control scheme is, for example, a set value or algorithm for protection and control to be implemented with respect to the electric power system K and each system area K-i. The protection is a function that maintains reliability of the electric power, that is, protection relay to separate target equipment when the equipment current or voltage is excessive.

The pseudo-model generation/update unit 14 generates or updates the scheme generation model (whole) 13D based on the actual status value (the system area K-i) and the predicted demand value (the system area K-i) which are input from the data integration unit 11, and stores it in a storage area of the digital twin server 1. Moreover, the pseudo-model generation/update unit 14 generates or updates a scheme generation pseudo-model 31D of each system area K-i based on the actual status value (the system area K-i) and the predicted demand value (the system area K-i) and transmits it to each edge control device 3-i. Each edge control device 3-i stores the scheme generation pseudo-model 31D, which has been received from the pseudo-model generation/update unit 14, in the storage area.

The input-output I/F 15 sends switching and switching-back instructions, which have been input by an operator h, regarding the protection/control scheme at the edge control device 3-i of each system area K-i, to each edge control device 3-i.

### (Configuration of Edge Control Device 3-i)

Referring to Fig. 1B, each of the plurality of edge control devices 3-i is provided for each of the plurality of system areas K-i which constitute the electric power system K. Each edge control device 3-i has a scheme generation unit 31, a scheme generation pseudo-model 31D, a switching judgment unit 32, a fixed scheme 32D, a scheme reception/setting unit 33, one or a plurality of virtual IEDs (Intelligent Electronic Devices) 34, a demand prediction unit 35, a demand prediction model 35D, and a data conversion/transmission unit 36.

The scheme generation unit 31 generates a second protection/control scheme SC2 (a second scheme) by using the scheme generation pseudo-model 31D received from the digital twin server 1. The scheme generation pseudo-model 31D is a pseudo-model for generating the second protection/control scheme SC2. The second protection/control scheme SC2 is a scheme for implementing the protection and the control of the system area K-i when the system area K-i which is a target of the protection and the control by the edge control device 3-i which has the relevant scheme generation unit 31 has become an isolated system from the electric power system K.

The switching judgment unit 32 selects any one of the first protection/control scheme SC1 (the first scheme), the second protection/control scheme SC2 (the second scheme), and a fixed scheme 32D (a third scheme) as a protection/control scheme to be actually used. When the reception of the first protection/control scheme SC1 from the digital twin server 1 is not normal or when the switching judgment unit 32 receives a switching instruction by the operator h, the switching judgment unit 32 switches to and outputs the second protection/control scheme SC2 instead of the first protection/control scheme SC1. Moreover, when the reception of the first protection/control scheme SC1 from the digital twin server 1 has recovered or when the switching judgment unit 32 receives the switching-back instruction by the operator h, the switching judgment unit 32 switches from the second protection/control scheme SC2 back to the first protection/control scheme SC1 and outputs the first protection/control scheme SC1. Furthermore, when the system is not stable due to fluctuations such as frequency fluctuations input from the data conversion/transmission unit 36 even if the switching judgment unit 32 switches to the second protection/control scheme SC2, the switching judgment unit 32 further switches from the second protection/control scheme SC2 to and outputs the fixed scheme 32D. The fixed scheme 32D is a protection/control scheme of the system area K-i including a margin which makes it possible to implement the protection and the control safely.

The scheme reception/setting unit 33 sets the first protection/control scheme SC1, the second protection/control scheme SC2, or the fixed scheme 32D which has been output by the switching judgment unit 32, as the protection/control scheme SC to be used for the protection and the control of each system area K-i, to the virtual IED 34.

The virtual IED 34 is a virtual IED that implements functions controlling and protecting the electric power system K constructed in a VM (virtual Machine) or a container of a general-purpose server. The virtual IED 34 has a device control unit 341 and a sensor data acquisition unit 342. The virtual IED 34 is connected with control object equipment 37 (such as a power generator and a transformer) of the system area K-i which is a control object of the edge control device 3-i that has the relevant virtual IED 34, for example, via a network compliant with the IEC 61850 / SCL (Substation Configuration Language) standard.

The sensor data acquisition unit 342 acquires a sensor signal from the control object equipment 37 and inputs sensor data based on the sensor signal to the device control unit 341 and the data conversion/transmission unit 36. The sensor signal is an output signal of a sensor provided to acquire a physical quantity relating to the operation of the control object equipment 37 and a physical quantity around the control object equipment 37.

The device control unit 341 generates a control signal based on the protection/control scheme SC input from the scheme reception/setting unit 33 and the sensor data input from the sensor data acquisition unit 342 and inputs the control signal to the control object equipment 37.

The demand prediction unit 35 generates a predicted value of the electric power demand for the system area K-i, which is the control object of the edge control device 3-i having the relevant demand prediction unit 35, by using the demand prediction model 35D and inputs the generated predicted demand value to the data conversion/transmission unit 36.

The data conversion/transmission unit 36 transmits the sensor data, which has been input from the virtual IED 34, as the actual status value (the system area K-i) and the predicted demand value, which has been input from the demand prediction unit 35, as the predicted demand value (the system area K-i) to the digital twin server 1. Moreover, the data conversion/transmission unit 36 extracts frequency fluctuations from the sensor data input from the virtual IED 34 and inputs them to the switching judgment unit 32.

### (Scheme Generation Model (Whole) 13D (DT Side) According to Embodiment 1)

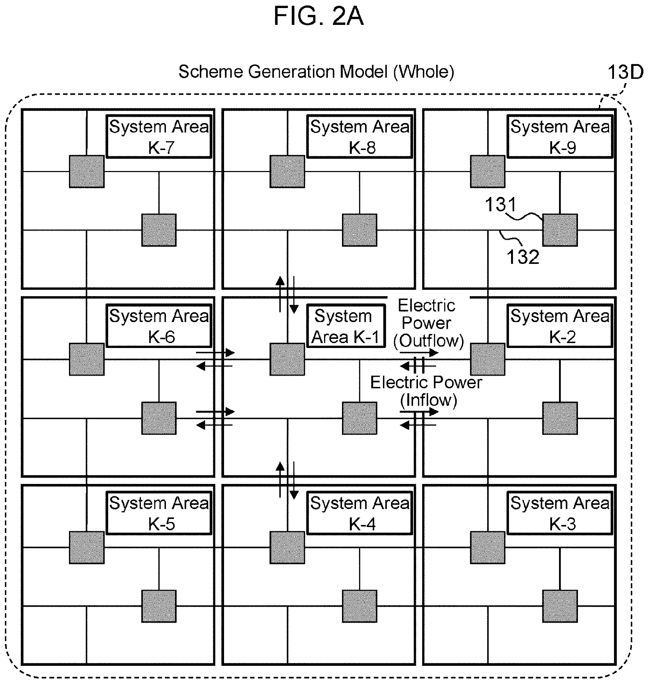

Fig. 2A is a diagram illustrating the scheme generation model (whole) 13D (the DT side) according to Embodiment 1. Each system area K-i has nodes/branches 131 such as a power generator, a transformer, and loads of customers and power transmission lines 132 for connecting the nodes/branches 131 together.

There are outflows and inflows of electric power between each system area K-i and its respective adjacent system areas. A system area K-1 is adjacent to system areas K-2, K-4, K-6, K-8. The system area K-2 is adjacent to system areas K-1, K-3, K-9. The system area K-3 is adjacent to the system areas K-2, K-4. The system area K-4 is adjacent to the system areas K-1, K-3, K-5. The system area K-5 is adjacent to the system areas K-4, K-6. The system area K-6 is adjacent to the system areas K-1, K-5, K-7. The system area K-7 is adjacent to the system areas K-6, K-8. The system area K-8 is adjacent to the system areas K-1, K-7, K-9. The system area K-9 is adjacent to the system areas K-2, K-8.

Incidentally, Fig. 2A shows that all the system areas K-I have similar configurations for convenience of explanation, but they may have different configurations.

### (Scheme Generation Pseudo-Model 31D (Edge Side) According to Embodiment 1)

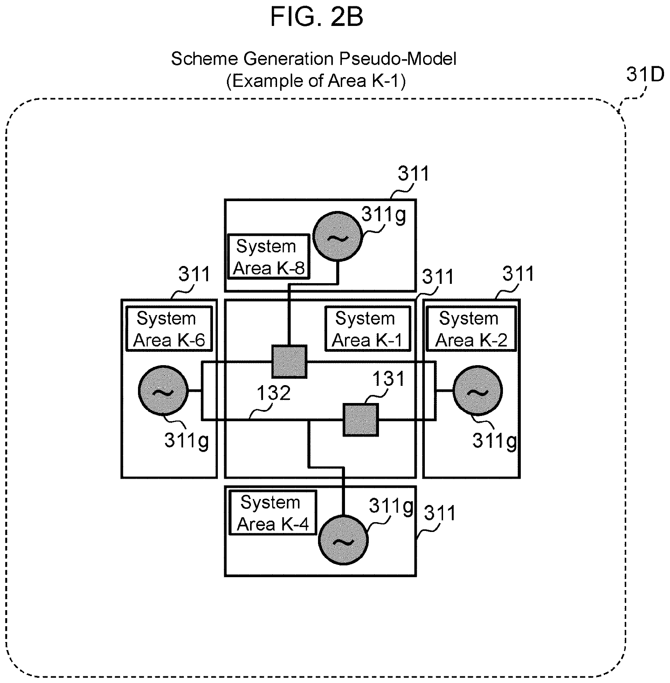

Fig. 2B is a diagram illustrating the scheme generation pseudo-model 31D (the edge side) according to Embodiment 1. Fig. 2B shows the scheme generation pseudo-model 31D of the system area K-1 as an example. Each power generator 311g for outputting a total amount of electric energy inflows/outflows from the respective system areas K-2, K-4, K-6, K-8 adjacent to the system area K-1 is set to the scheme generation pseudo-model 31D of the system area K-1. An output value of each power generator 311g can be expressed as a specified mathematical expression or fixed value with a sign. Regarding the output value of the power generator 311g, a positive sign represents the outflow of the electric power to the system area K-1 and a negative sign represents the inflow of the electric power from the system area K-1.

### (Pseudo-Model Generation/Update Processing According to Embodiment 1)

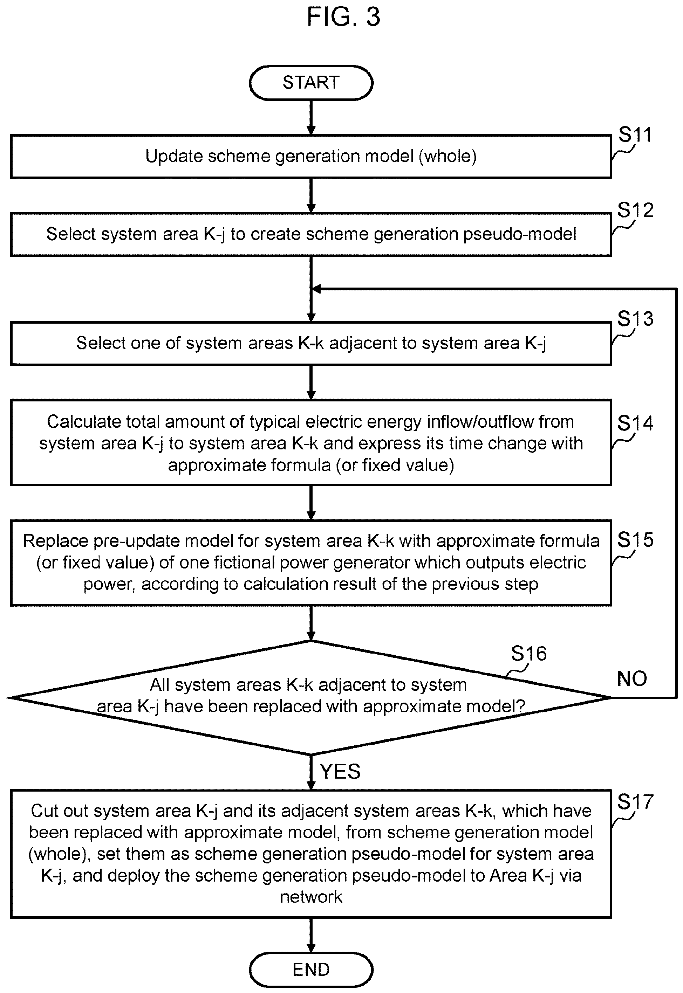

Fig. 3 is a flowchart illustrating pseudo-model generation/update processing according to Embodiment 1. The pseudo-model generation/update processing is processing for creating the scheme generation pseudo-model 31D of each system area K-i. The pseudo-model generation/update processing is executed every time the pseudo-model generation/update unit 14 acquires a new actual status value (the system area K-i) and a new predicted demand value (the system area K-i) of each system area from the data integration unit 11.

Firstly, in step S11, the pseudo-model generation/update unit 14 acquires the new actual status value (the system area K-i) and predicted demand value (the system area K-i) of each system area K-I from the data integration unit 11. Then, the pseudo-model generation/update unit 14 sets the acquired new actual status value (the system area K-i) and predicted demand value (the system area K-i) to the scheme generation pseudo-model (whole) 13D and updates the model.

Next, in step S12, the pseudo-model generation/update unit 14 selects the system area K-j (j=1, 2, ..., 9) for which the scheme generation pseudo-model 31D is to be created. Then, in step S13, the pseudo-model generation/update unit 14 selects one system area K-k (k≠j) adjacent to the system area K-j selected in step S12. Subsequently, in step S14, the pseudo-model generation/update unit 14 calculates a total amount of typical electric energy regarding which the inflows/outflows of the electric power occur between the system area K-j selected in step S12 and the system area K-k selected in step S13, and creates an approximate formula which represents its time change. However, if the time change is small, a fixed value may be used. The "typical electric energy" is calculated, for example, based on a statistical value such as an average value excluding outliers.

Next, in step S15, the pseudo-model generation/update unit 14 replaces the scheme generation pseudo-model 31D of the system area K-k selected in step S13 with an approximate model of one fictional power generator which outputs the electric power in accordance with the approximate formula calculated in step S14 or the fixed value.

Then, in step S16, the pseudo-model generation/update unit 14 judges whether the scheme generation pseudo-models 31D of all the system areas K-k adjacent to the system area K-j selected in step S13 have been replaced with the approximate model or not. If the scheme generation pseudo-models 31D of all the system areas K-k have been replaced with the approximate model (YES in step S16), the pseudo-model generation/update unit 14 causes the processing to proceed to step S17. On the other hand, if any scheme generation pseudo-model 31D of the system area K-k which has not been replaced with the approximate model exists (NO in step S16), the pseudo-model generation/update unit 14 causes the processing to return to step S13.

In step S17, the pseudo-model generation/update unit 14 cuts out the system area K-j and the adjacent system areas K-k, for which the scheme generation pseudo-models 31D have been replaced with the approximate model, from the scheme generation model (whole) 13D and sets them as the scheme generation pseudo-model 31D of the system area K-j. Then, the pseudo-model generation/update unit 14 deploys the scheme generation pseudo-model 31D in the system area K-j via the network N.

### (Switching Judgment Processing According to Embodiment 1)

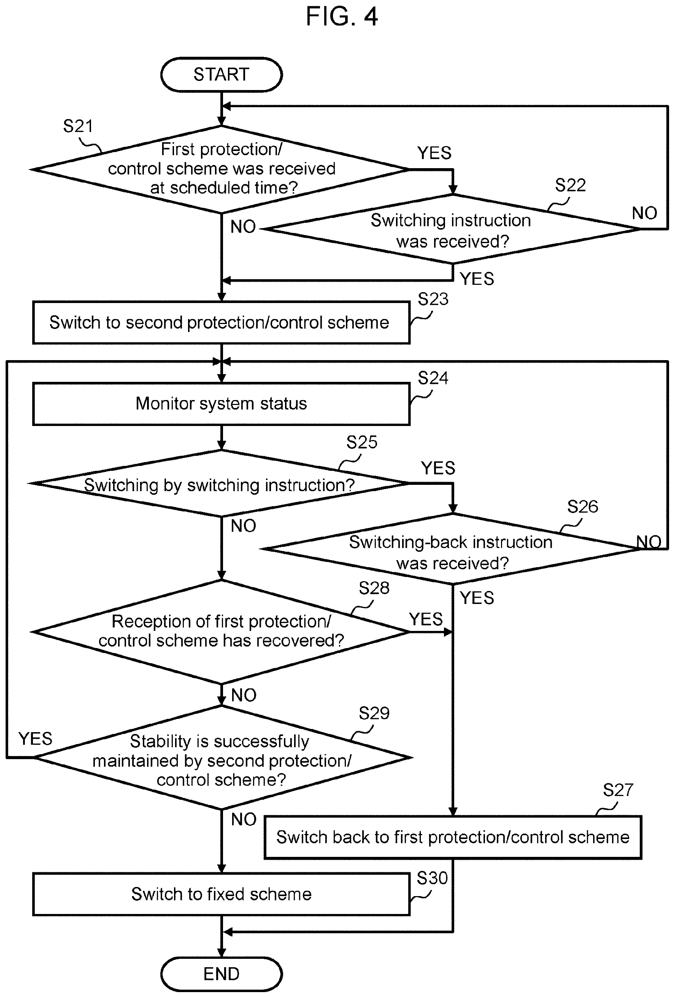

Fig. 4 is a flowchart illustrating switching judgment processing according to Embodiment 1. The switching judgment processing is executed every time the first protection/control scheme SC1 is regularly received from the scheme generation unit 13 of the digital twin server 1 by the switching judgment unit 32 of the system area K-i or the switching/switching-back instruction by the operator h is received from the digital twin server 1.

Firstly, in step S21, the switching judgment unit 32 judges whether or not the first protection/control scheme SC1 which is transmitted from the digital twin server 1 periodically was received at scheduled time. If the first protection/control scheme SC1 was received at the scheduled time (YES in step S21), the switching judgment unit 32 causes the processing to proceed to step S22. On the other hand, if the first protection/control scheme SC1 was received not at the scheduled time (NO in step S21), the switching judgment unit 32 causes the processing to proceed to step S23.

In step S22, the switching judgment unit 32 judges whether or the switching instruction by the operation h was received from the digital twin server 1. If the switching instruction was received (YES in step S22), the switching judgment unit 32 causes the processing to proceed to step S23; and if the switching instruction was not received (NO in step S22), the switching judgment unit 32 causes the processing to return to step S21.

In step S23, the switching judgment unit 32 switches from the first protection/control scheme SC1 to the second protection/control scheme SC2. The switching judgment unit 32 becomes to output the second protection/control scheme SC2 to the scheme reception/setting unit 33 by switching to the second protection/control scheme SC2.

Next, in step S24, the switching judgment unit 32 monitors the system status (such as frequency fluctuations) of the system area K-i. In step S24, the monitoring results may be received from an existing grid stabilization system and be used.

Then, in step S25, the switching judgment unit 32 judges whether the current processing is processing executed as a result of the judgment that the switching instruction was received in step S22. If it is the processing executed as the result of the judgment that the switching instruction was received (YES in step S25), the switching judgment unit 32 causes the processing to proceed to step S26. On the other hand, if it is the processing executed as the result of the judgment that the switching instruction was not received (NO in step S25), the switching judgment unit 32 causes the processing to proceed to step S28.

In step S26, the switching judgment unit 32 judges whether or not the switching-back instruction by the operator h was received from the digital twin server 1. If the switching-back instruction was received (YES in step S26), the switching judgment unit 32 causes the processing to proceed to step S27; and if the switching-back instruction was not received (NO in step S26), the switching judgment unit 32 causes the processing to return to step S24.

In step S27, the switching judgment unit 32 switches from the second protection/control scheme SC2 (back) to the first protection/control scheme SC1 so as to return to the first protection/control scheme SC1. The switching judgment unit 32 becomes to output the first protection/control scheme SC1 to the scheme reception/setting unit 33 by switching back to the first protection/control scheme SC1. When step S27 terminates, the switching judgment unit 32 terminates the switching judgment unit processing.

On the other hand, in step S28, the switching judgment unit 32 judges whether the reception of the first protection/control scheme SC1 from the digital twin server 1 has recovered or not. If the reception of the first protection/control scheme SC1 has recovered (YES in step S28), the switching judgment unit 32 causes the processing to proceed to step S27. On the other hand, if the reception of the first protection/control scheme SC1 has not recovered (NO in step S28), the switching judgment unit 32 causes the processing to proceed to step S29.

In step S29, the switching judgment unit 32 judges whether the stable protection/control operation of the system area K-i is successfully implemented with the second protection/control scheme SC2. The successful implementation of the stable protection/control operation means that, for example, the monitoring results of the system status (such as the frequency fluctuations) are within a threshold value range. If the stable protection/control operation of the system area K-i is successfully implemented with the second protection/control scheme SC2 (YES in step S29), the switching judgment unit 32 causes the processing to return to step S24. On the other hand, if the stable protection/control operation of the system area K-i is not successfully implemented with the second protection/control scheme SC2 (NO in step S29), the switching judgment unit 32 causes the processing to proceed to step S30.

In step S30, the switching judgment unit 32 switches the protection/control scheme from the second protection/control scheme SC2 to the fixed scheme 32D. When step S30 terminates, the switching judgment unit 32 terminates the switching judgment unit processing.

According to Embodiment 1 described above, even if some of the system areas become an isolated system due to, for example, disconnection of the power transmission lines or disconnection of the network N, it is possible to continue generating the protection/control schemes by conducting changes of the adaptive protection/control schemes and avoid shutdown of the power generator in the isolated system.

For example, let us assume a case where a power transmission line connecting a system area A and a system area B in the electric power system K is disconnected and the system area B becomes an isolated system. Even if a power generator(s) for hydroelectric power generation or wind power generation, which is capable of generating the electric power, still remains in the system area B, the isolation causes unexpected rapid frequency fluctuations to occur and the power generator thereby stops for the sake of protection and the system area B sometimes directly becomes blacked out. The blackout occurs when the protection/control scheme is fixed and thereby cannot bear the rapid frequency fluctuations.

So, if the power generation by the power generator in the system area B can be continued by conducting changes of the adaptive protection/control schemes as in Embodiment 1, the blackout of the system area B can be avoided and the electric power supply of other system areas can be recovered speedily.

### [Embodiment 2]

When predicting demand in the near-future and the system status on the digital twin side, calculation is performed based on data collected from each edge side; however, there is a problem of inability to continue the prediction if data cannot be collected from some of the system areas.

So, in Embodiment 2, a pseudo-output model for performing pseudo-output of an output value of each system area is prepared on the digital twin side. Then, if the data cannot be collected from some of the system areas on the digital twin side due to whatever cause, the pseudo-output model is used to generate an alternative value of the output value. Therefore, even if the data cannot be collected from some of the system areas, it is possible to continue predicting the demand and the system status on the digital twin side by using this alternative value.

### (Configuration of Electric Power System Protection/Control System 2S According to Embodiment 2)

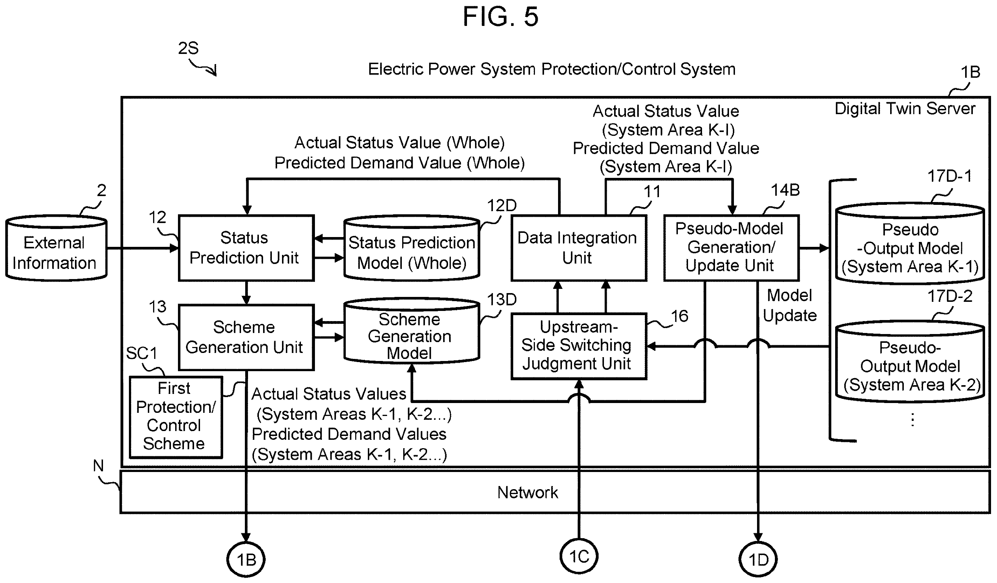

Fig. 5 is a diagram illustrating the configuration (DT side) of an electric power system protection/control system 2S according to Embodiment 2. As compared to the electric power system protection/control system S according to Embodiment 1, the electric power system protection/control system 2S is different because it has a digital twin server 1B instead of the digital twin server 1. Regarding other respects, the electric power system protection/control system 2S is similar to that in Embodiment 1.

As compared to the digital twin server 1, the digital twin server 1B is different because the input-output I/F 15 is omitted and the digital twin server 1B has a pseudo-model generation/update unit 14B instead of the pseudo-model generation/update unit 14. Moreover, as compared to the digital twin server 1, the digital twin server 1B is different because it has an upstream-side switching judgment unit 16 and a pseudo-output model 17D-j (j=1, 2, ..., 9) of each system area K-j. Regarding other respects, the digital twin server 1B is similar to that in Embodiment 1.

The pseudo-model generation/update unit 14B combines the calculation results regarding each system area K-j by using the "typical electric energy inflows/outflows from each system area K-j to its adjacent system areas K-k" calculated when creating the scheme generation pseudo-model 31D of each system area K-j. The pseudo-output model 17D-j of each system area K-j is generated by combining the calculation results regarding each system area K-j. The pseudo-model generation/update unit 14B saves each generated pseudo-output model 17D-j in the storage area.

The upstream-side switching judgment unit 16 judges whether the actual status value (the system area K-m) and the predicted demand value (the system area K-m) of each system area K-m were received from the plurality of edge control devices 3-m (m=1, 2, ..., 9). Then, the upstream-side switching judgment unit 16 acquires the pseudo-output model 17D-m of a system area K-p regarding which the above-described values were not received. Subsequently, the upstream-side switching judgment unit 16 estimates an actual status value (the system area K-p) and a predicted demand value (the system area K-p) of the system area K-p, as pseudo-output values, based on the pseudo-output model 17D-m of the system area K-p and current time of day. The estimated value at the current time of day t1 based on the pseudo-output model 17D-m becomes the actual status value (the system area K-m). Also, the estimated value at future time of day t2 based on the pseudo-output model 17D-m becomes the predicted demand value (the system area K-m).

The upstream-side switching judgment unit 16 transmits the estimated actual status value (the system area K-p) and predicted demand value (the system area K-p), instead of the actual status value and the predicted demand value of the system area K-p which should have been originally received, to the data integration unit 11. When creating the actual status value (whole) and the predicted demand value (whole), the data integration unit 11 uses the estimated values of the actual status value (the system area K-p) and the predicted demand value (the system area K-p) which are received as replacements, instead of the actual status value and the predicted demand value which should have been originally received. The status prediction unit 12 predicts the system status of the electric power system K of the next time slot based on the actual status value (whole) and the predicted demand value (whole) created by using the estimated values of the actual status value (the system area K-p) and the predicted demand value (the system area K-p).

### (Pseudo-Output Model 17D-m According to Embodiment 2)

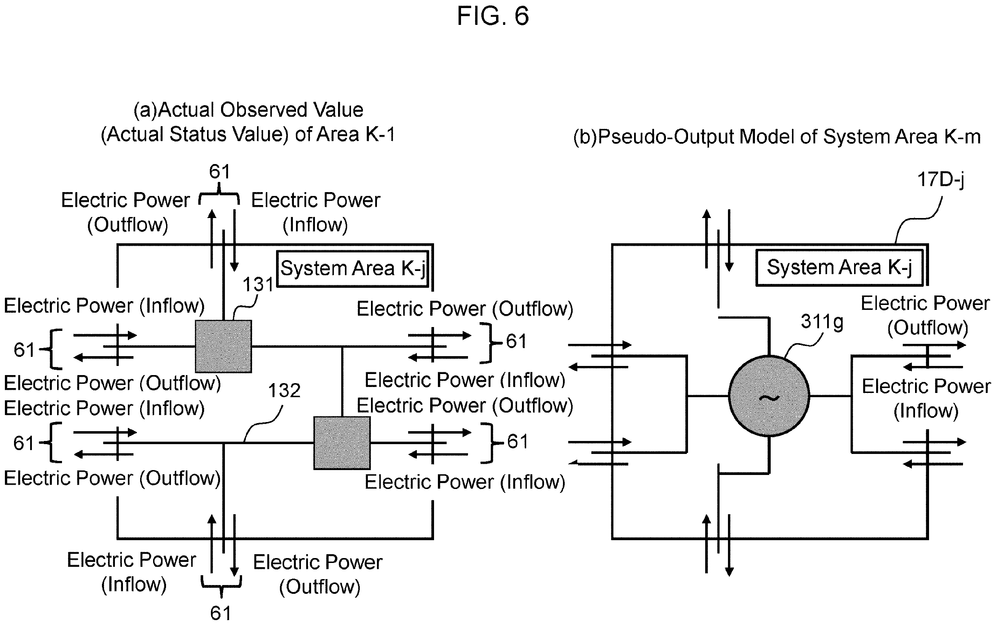

Fig. 6 is a diagram illustrating the pseudo-output model 17D-m according to Embodiment 2. As illustrated in Fig. 6(a), all the "typical electric energy 61 inflows/outflows from the system area K-j to its adjacent system areas K-n" that is observed values (actual status values) calculated when creating the scheme generation pseudo-model 31D of the system area K-j are combined together. As a result, a pseudo-output model 17D-j regarding which an electric power output source of the system area K-j illustrated in Fig. 6(b) is replaced with one power generator 311g is created.

### (Pseudo-Model Generation/Update Processing According to Embodiment 2)

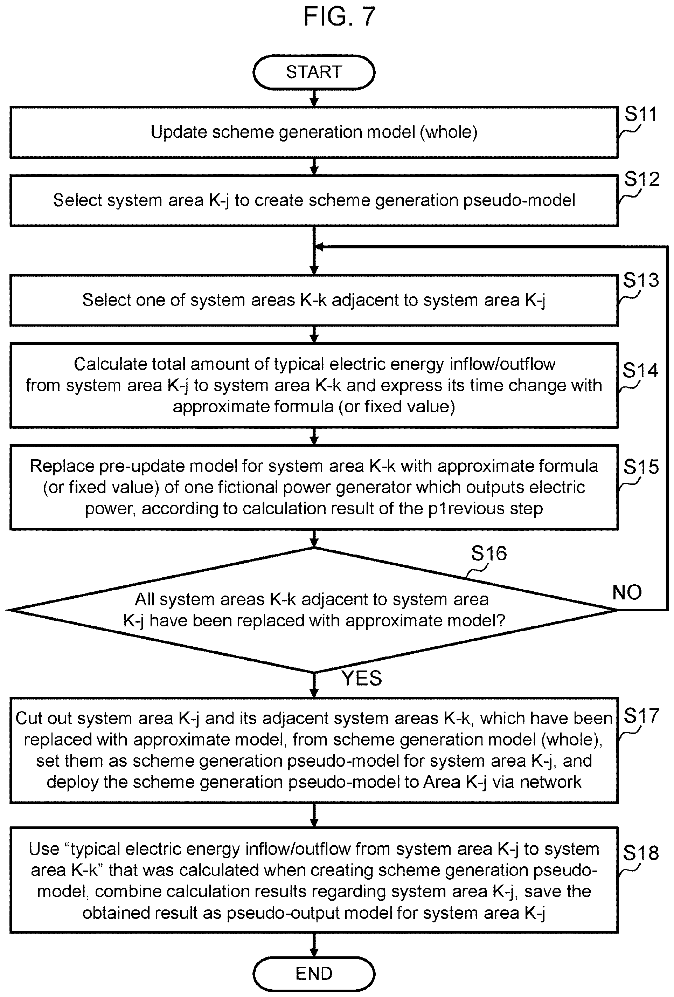

Fig. 7 is a flowchart illustrating pseudo-model generation/update processing according to Embodiment 2. As compared to the pseudo-model generation/update processing according to Embodiment 1, the pseudo-model generation/update processing according to Embodiment 2 is different because it has step S18 following step S17; and regarding other respects, the pseudo-model generation/update processing is similar to that according to Embodiment 1.

In step S18, the pseudo-model generation/update unit 14B uses the calculation results of the "typical electric energy inflows/outflows from each system area K-j to its adjacent system areas K-k" calculated when creating the scheme generation pseudo-model in step S14. Then, the pseudo-model generation/update unit 14B combines the calculation results regarding the system area K-j and saves the combined result as the pseudo-output model 17D-j of the system area K-j.

### (Switching Judgment Processing According to Embodiment 2)

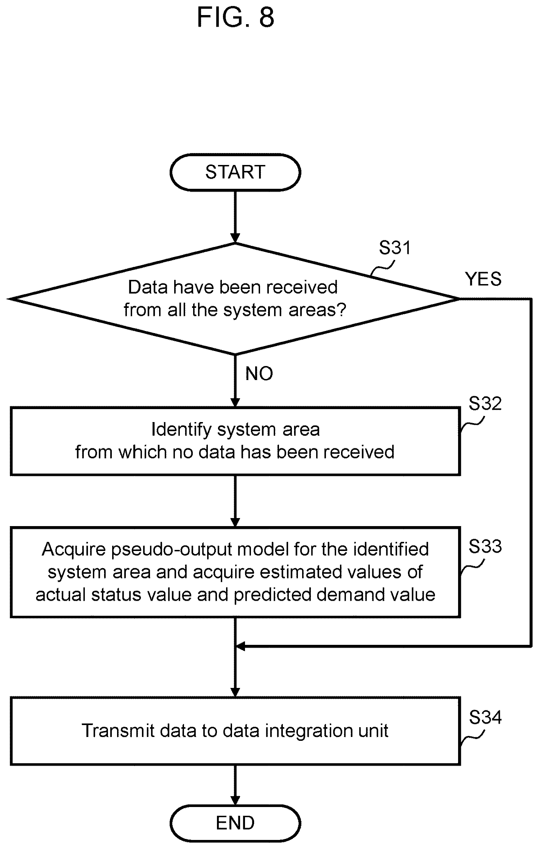

Fig. 8 is a flowchart illustrating switching judgment processing according to Embodiment 2. The switching judgment processing according to Embodiment 2 is executed regularly by the upstream-side switching judgment unit 16.

Firstly, in step S31, the upstream-side switching judgment unit 16 judges whether the actual status value (the system area K-m) and the predicted demand value (the system area K-m) of each system area K-m have been received from all the edge control devices 3-m (m=1, 2, ..., 9). If the above-mentioned values have been received from all the system areas K-m (YES in step S31), the upstream-side switching judgment unit 16 causes the processing to proceed to step S34; and if any system area K-m regarding which the above-mentioned values have not been received exists (NO in step S31), the upstream-side switching judgment unit 16 causes the processing to proceed to step S.32

In step S32, the upstream-side switching judgment unit 16 identifies the system area K-n regarding which the above-mentioned values have not been received. Next, in step S33, the upstream-side switching judgment unit 16 acquires a pseudo-output model 17D-n of the system area K-n identified in step S32. Then, the upstream-side switching judgment unit 16 acquires estimated values of the actual status value and the predicted demand value of the system area K-n based on the current time of day and the pseudo-output model 17D-n.

Next, in step S34, the upstream-side switching judgment unit 16 collects the data received in step S31 and the data estimated in step S33 and transmits them to the data integration unit 11.

The above-described embodiments have been explained by taking examples of the protection/control system for the electric power system. However, the application target of the present invention is not limited to the protection and control of the electric power system. Specifically speaking, the present invention can be applied to a wide variety of control systems regarding which a simulation target at the digital twin server is divided by area or region and mutual processing is continued by exchanging mutual data between the digital twin server and the edge control devices, each of which is provided for each area or region. For example, the invention can be applied to control systems including, for example, digital twins for infrastructure systems such as electricity, water, and gas and digital twins for predicting movements of automobiles and people and traffic jams.

### (Advantageous Effects of Embodiments 1 and 2)

In the aforementioned embodiments, at least one computer of the server computer (the digital twin server 1) and the edge computer (the plurality of edge control devices 3-i) has a model (the scheme generation model 13D or the demand prediction model 35D). Moreover, another computer which is different from the one computer has a pseudo-model corresponding to this model (the scheme generation pseudo-model 31D corresponding to the scheme generation model 13D or the pseudo-output model 17D-j corresponding to the demand prediction model 35D). The one computer generates first data (the first protection/control scheme SC1 or the predicted demand value) to be used for processing at the other computer based on this model and transmits the first data to the other computer. Furthermore, the other computer executes specified processing (the control based on the first protection/control scheme SC1 or the status prediction based on the predicted demand value, and the generation of the first protection/control scheme SC1) at the other computer based on the first data received from the one computer. When the other computer cannot receive the first data from the one computer, it generates the second data (the second protection/control scheme SC2 or the pseudo-output value for each system area) based on the pseudo-model. Then, the other computer executes the specified processing at the other computer based on the second data.

Therefore, according to the aforementioned embodiments, even if a certain system area becomes an isolated system due to, for example, a disaster, the protection and control of that system area can be continued by the adaptive protection system and the system stability of that system area can be maintained.

Moreover, according to the aforementioned embodiments, in a case where some system area needs to be prioritized and controlled at high frequency due to, for example, emergency, the prediction and the scheme generation are conducted in real time with respect to not the entire electric power system, but only the relevant system area in accordance with the switching instruction(s) of the operator h. Meanwhile, with respect to system areas other than the relevant system area, the prediction and the scheme generation are conducted by switching to the pseudo-model. Although the prediction and the scheme generation of the entire system on the digital twin side requires enormous calculation resources, it is possible to conduct the prediction and the scheme regeneration in short cycles by updating the data in real time with respect to only some system area.

Furthermore, in the aforementioned embodiments, when expanding the adaptive protection introduction areas, the operation and introduction effects are firstly verified by using the pseudo-model on each of the digital twin side and the edge side with respect to a new system area in accordance with the switching instruction of the operator h. Then, if there is no problem, it is possible to switch to the actual performance according to the switching-back instruction of the operator h, so that the adaptive protection can be introduced smoothly.

### (Hardware Configuration of Computer 1000)

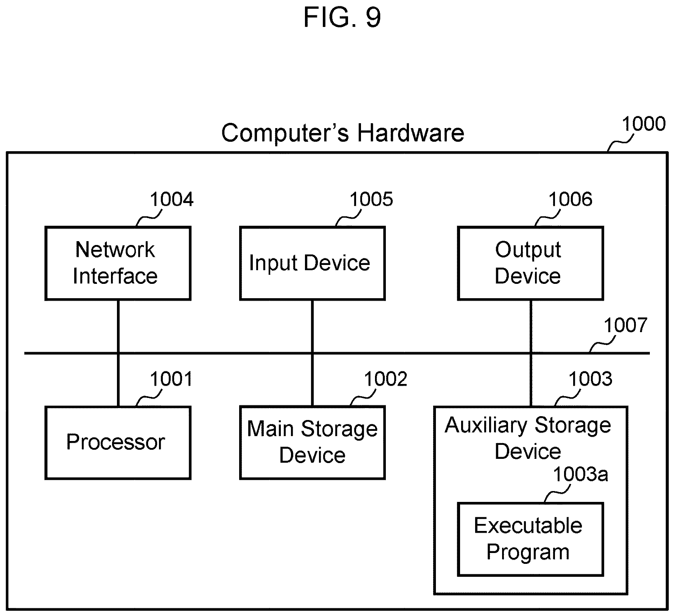

Fig. 9 is a diagram illustrating a configuration example of hardware of a computer 1000. The computer 1000 implements the respective units of the electric power system protection/control system S, 2S, the digital twin server 1, and the edge control devices 3-i by executing specified programs.

The computer 1000 includes a processor 1001 such as a CPU, a main storage device 1002, an auxiliary storage device 1003, a network interface 1004, an input device 1005, and an output device 1006 which are mutually connected via an internal communication wire 1007 such as a bus.

The processor 1001 controls the operation of the entire computer 1000. The main storage device 1002 is composed of, for example, a volatile semiconductor memory and is used as a work memory for the processor 1001. The auxiliary storage device 1003 is composed of a large-capacity nonvolatile storage device such as a hard disk drive, an SSD (Solid State Drive), or a flash memory and is used to retain various kinds of programs and data for a certain period of time.

An executable program 1003a which is stored in the auxiliary storage device 1003 is loaded to the main storage device 1002 upon the activation of the computer 1000 or whenever necessary, and is then executed by the processor 1001.

Incidentally, the executable program 1003a may be recorded in a non-transitory recording medium, be read from the non-transitory recording medium by a media reader, and be loaded into the main storage device 1002. Alternatively, the executable program 1003a may be obtained from an external computer via the network and be loaded into the main storage device 1002.

The auxiliary storage device 1003 stores various kinds of executable programs 1003a.

The network interface 1004 is an interface device for connecting the computer 1000 to each network in the system or for communicating with other computers. The network interface 1004 is composed of, for example, an NIC (Network Interface Card) for a wired LAN (Local Area Network) or a wireless LAN, etc.

The input device 1005 is composed of a keyboard, a pointing device such as a mouse, and so on and is used by the user to input various kinds of instructions and information to the computer 1000. The output device 1006 is composed of, for example, a display device such as a liquid crystal display or an organic EL (Electro Luminescence) display, and a sound output device such as a speaker and is used to present necessary information to the user.

Incidentally, the present invention is not limited to the aforementioned embodiments, and includes various forms. For example, the aforementioned embodiments have been described in detail in order to explain the present invention in an easily comprehensible manner and do not necessarily need to have all the configurations explained above. Furthermore, part of the configuration of a certain embodiment or variation can be replaced with the configuration of another embodiment or variation and the configuration of another embodiment or variation can be added to the configuration of a certain embodiment or variation. Specifically speaking, regarding each embodiment or variation, it can be combined with another embodiment or variation and the deletion of the configuration(s) and the addition or replacement by the other configuration can be performed.

## Claims

1. A control method executed by a control system configured by comprising a server computer and an edge computer,
the control system having a model at least at one computer among the server computer and the edge computer, and a pseudo-model corresponding to the model at another computer different from the one computer, and
the control method comprising the following respective processing:
processing executed by the one computer for generating first data to be used for specified processing at the other computer based on the model and transmitting the first data to the other computer, and
processing executed by the other computer for:
executing the specified processing at the other computer based on the first data received from the one computer;
generating second data based on the pseudo-model when the first data cannot be received from the one computer; and
executing the specified processing at the other computer based on the second data.

2. The control method according to claim 1,
wherein the control system is an electric power system protection/control system for implementing protection and control of an electric power system composed of a plurality of system areas; and
wherein the edge computer is provided in plurality and is provided for each of the system areas; and
each of the edge computers performs the protection and the control of each of the system areas.

3. The control method according to claim 2,
wherein the one computer is the server computer having the model; and
the other computer is the plurality of edge computers having the pseudo-model.

4. The control method according to claim 3,
wherein the server computer has, as the model, a scheme generation model for generating a scheme to implement the protection and the control of each of the system areas;
wherein the edge computer has, as the model, a demand prediction model for predicting electric power demand of each of the system areas;
wherein the server computer has a pseudo-output model corresponding to the demand prediction model; and
wherein the edge computer has a scheme generation pseudo-model corresponding to the scheme generation model.

5. The control method according to claim 4,
wherein the scheme is a set value or algorithm for the protection and the control to be implemented with respect to each of the system areas.

6. The control method according to claim 4,
wherein each of the plurality of edge computers has the following respective processing for:
when having received a first scheme as the scheme from the server computer, implementing the protection and the control of each of the system areas based on the first scheme; and
when having failed to receive the first scheme from the server computer or when having received a specified switching instruction from the server computer, generating a second scheme to replace the first scheme based on the scheme generation pseudo-model and switching to implementation of the protection and the control of each of the system areas based on the second scheme.

7. The control method according to claim 6,
wherein each of the plurality of edge computers has the following respective processing for:
when, after switching to the implementation of the protection and the control of each of the system areas based on the second scheme, reception of the first scheme from the server computer has recovered or a specified switching-back instruction is received from the server computer, returning to implementation of the protection and the control of each of the system areas based on the received first scheme.

8. The control method according to claim 6,
wherein each of the plurality of edge computers has the following respective processing for:
judging whether the protection and the control of each of the system areas are implemented successfully and stably after switching to the implementation of the protection and the control of each of the system areas based on the second scheme;
continuing implementing the protection and the control of each of the system areas based on the second scheme when the protection and the control of each of the system areas are implemented successfully and stably; and
switching to the implementation of the protection and the control of each of the system areas based on a third scheme which replaces the second scheme when the protection and the control of each of the system areas are not implemented successfully and stably.

9. The control method according to claim 6,
wherein the server computer has the following respective processing for:
receiving a predicted demand value of electric power for each of the system areas which is generated based on the demand prediction model from the plurality of edge computers;
executing generation of the scheme and update of the scheme generation model based on the received predicted demand value; and
if any of the system areas which has failed to receive the predicted demand value from the plurality of edge computers exists, generating a pseudo-output value for that system area based on the pseudo-output model and executing generation of the scheme and update of the scheme generation model based on the pseudo-output value instead of the predicted demand value.

10. A control system configured by comprising a server computer and an edge computer,
wherein the control system has a model at least at one computer among the server computer and the edge computer and a pseudo-model corresponding to the model at another computer different from the one computer;
wherein the one computer generates first data to be used for specified processing at the other computer based on the model and transmits the first data to the other computer; and
wherein the other computer:
executes the specified processing at the other computer based on the first data received from the one computer;
generates second data based on the pseudo-model when the first data cannot be received from the one computer; and
executes the specified processing at the other computer based on the second data.
